# FASCICULE DE BREVET EUROPEEN

(11) **EP 1 603 281 B1**
(45) Date de publication et mention de la délivrance du brevet: **19.12.2007**
(21) Numéro de dépôt: 05380015.7
(22) Date de dépôt: 27.01.2005
(51) Int. Cl.: H04L 12/28, H04M 11/06

(54) **Modules distributeurs configurables de services de communications pour des habitations et assimilés**
Konfigurierbares Modul für Kommunikationsdiensten in Häusern
Configurable module for distributing communication services to the home

(30) Priorité: 02.06.2004 ES 200401337
(43) Date de publication de la demande: 07.12.2005
(73) Titulaire: Simon, S.A., 08013 Barcelona (ES)
(72) Inventeur: Aubert Capella, Joaquin, 08017 Barcelona (ES)
(74) Mandataire: Espiell Volart, Eduardo Maria

(56) Documents cités:
- EP-A- 0 928 096
- EP-A- 1 467 522
- WO-A-01/06751
- FR-A- 2 839 223
- US-B1- 6 449 362

## Description

Cette invention concerne des perfectionnements aux systèmes de modules distributeurs configurables de services de télécommunications, destinés à leur application dans des habitations, des bureaux et lieux du secteur tertiaire dont les caractéristiques sont décrites ci-après.

En général, la fonction basique d'un module configurable de service de communications est d'offrir une grande flexibilité aux services de télécommunications et de données qui arrivent actuellement aux installations des maisons et du secteur tertiaire, celles-ci étant entendues comme tout ce qui concerne le petit commerce, les sociétés de services, l'industrie moyenne et assimilés.

### ÉTAT DE L'ART

Les techniques modernes de communication qui existent actuellement ont permis, dans la pratique, que même les domiciles privés soient pourvus de réseaux domestiques de communication, de réception de données et de domotique, avec les avantages évidents que tout cela comporte.

Ces installations sont réglementées par les normes ICT (Infrastructures Communes de Télécommunications), qui obligent actuellement à ce que l'on dispose déjà dans les édifices nouvellement construits de tous les éléments normalisés permettant une connexion rapide et facile des réseaux extérieurs de télécommunications et leur distribution à l'intérieur des dépendances.

En ce qui concerne la distribution de ces services, attendu ce qui est réglementé par l'ICT, l'état actuel de la technique reste limité à l'agencement des éléments unitaires permettant de distribuer les divers services de façon directe et précise sans arriver à obtenir une centralisation de l'action de distribution et de son contrôle, ainsi que la configuration souhaitée ou nécessaire, à certains moments, du type de service pouvant être disposé à un certain point ou prise ni leur interconnexion.

Il faut citer également du même déposant la publication EP-A-1467522 publiée le 13-10-2004, qui décrit concernant un module distributeur configurable de services de communication pour habitations et assimilés, un brevet qui est sensiblement amélioré par tous les perfectionnements objet de cette invention.

Il faut noter également que la société France Télécom est titulaire du brevet français FR 2839223, qui s'adresse à ce même but.

Les perfectionnements introduits à l'ensemble du module distributeur de services objet de cette invention, en plus de respecter les normes actuellement existantes, permettra de s'occuper de façon adéquate des aspects concernant la sécurité et la robustesse de cet ensemble.

### DESCRIPTION DES PERFECTIONNEMENTS

Le module distributeur configurable auquel ont été appliqués les perfectionnements, objet de la présente invention pourra être utilisé pour agir comme standard de services de communications à l'intérieur de l'habitation ou assimilé, en permettant leur distribution, toujours de façon échelonnée et flexible, aux diverses prises de communication de l'habitation, en permettant également les divers services d'accès, aussi bien ceux existants que ceux qui sont en cours d'expansion sur le marché résidentiel, des services dont l'accès ne se fait que par une seule ligne téléphonique.

Il faudra tenir compte du respect des normes ICT ainsi que de tous les aspects concernant la sécurité et la robustesse du propre système.

Avec ce système on atteindra également l'objectif, du point de vue de l'installation, d'optimiser la solution de câblage.

Les perfectionnements objet de cette invention, appliqués à des modules distributeurs font qu'ils soient compatibles avec les spécifications requises par l'ICT, aussi bien pour les dimensions et les possibilités de connexion de l'extérieur, que pour les diverses fonctions qu'ils pourront mettre en oeuvre.

Ces fonctions sont les suivantes:

### Le réseau informatique:

Permettre de générer un réseau informatique (LAN) sur lequel pourront être connectés indifféremment les divers éléments informatiques de la maison, tels que des PC, des imprimantes, des scanners, des modems de connexion et d'autres dispositifs informatiques.

Pour ce, il faudra tenir compte du fait que les différentes connexions au réseau informatique depuis les points installés et configurés doivent être parallèles, en fonctionnant de façon indépendante par rapport au reste des services.

Le réseau informatique aura de préférence le format Fast Ethernet, pour lequel, le système disposera alors d'un HUB dont la vitesse sera de 10/100.

Il faudra que le réseau ait la capacité de neutraliser physiquement une sortie précise du réseau au moyen d'un bouton de sorte que ce réseau ne soit absolument pas affecté dans son fonctionnement, la zone correspondante de la partie de la ligne téléphonique n'étant donc pas affectée.

### La capacité d'accès multiple:

Simultanément au réseau informatique, la communication des données et de voix de l'habitation ou espace assimilé est rattachée à trois formes d'accès de voix et de données différenciées, que le système doit comporter.
- La ligne téléphonique; et
- La ligne d'ADSL

Puisque la sélection entre les deux types d'accès sera à travers un bouton, la ligne d'accès dans le cas où on aura l'ADSL on disposera de la solution de filtrage (splitter) déjà incorporée sur la ligne téléphonique.

Avec ce type d'accès, il faut tenir compte des aspects fonctionnels suivants:
- La capacité de modification du service rattaché à chaque point terminal du réseau (prise finale); et
- La capacité d'échanger le type d'accès extérieur: Ligne téléphonique ou d'ADSL.

### L'accès à internet:

La fonctionnalité d'accès à internet dépend du moyen d'accès choisi et défini à l'alinéa précédent d'accès multiple. Il faut donc tenir compte des types suivants:
- Accès à internet au moyen de la ligne téléphonique: accès au moyen de modem directement, ou
- Accès à internet au moyen de la ligne d'ADSL: accès au moyen de modem au canal de données sortant directement du Splitter.

### Les prises terminales du réseau:

En ce qui concerne les prises dont il faut tenir compte pour le système, elles comporteront des prises doubles RJ12 et RJ45 permettant que les services soient simultanés: d'une part le service du réseau informatique et d'autre part le service d'accès multiple correspondant à l'appareil téléphonique de voix et de données d'ADSL.

### L'alimentation du module:

Le système auquel sont appliqués les perfectionnements objet de cette invention, afin d'éviter de possibles problèmes de variations des alimentations qui pourront être effectuées, ainsi que pour tenir compte des aspects concernant la sécurité, doit être autonome, en tenant compte qu'il faut disposer de phase neutre et de terre.

### Le suppresseur de ligne téléphonique:

Le système doit permettre la désactivation de sa ligne extérieure pour chacun des points de connexion de téléphonie.

### Le suppresseur de réseau

Le système doit permettre également la désactivation de la prise du réseau pour chacun des points de connexion du réseau informatique, en tapant sur l'indicateur de prise.

### Le câblage et la connexion aux bornes:

Le câblage, depuis le système jusqu'aux différentes prises dont la solution projetée aura besoin, doit être unique et le même pour tous les services qui y seront reliés, en tenant compte que le choix devra être fait dans le module central du système et qu'il pourra être modifié selon les besoins de chaque moment.

La connexion aux bornes du système doit être simple et au moyen de l'application d'agrafes permettant des modifications postérieures de la configuration faciles et rapides.

L'existence de deux éléments de connexion supplémentaires (sortie auxiliaire et connecteur RJ12) permet de couvrir la solution d'intégration avec un routeur. Pour ce, les deux connexions doivent être standard (type RJ45 et RJ12, respectivement) et aptes pour la connexion de câbles extérieure au système.

### La sécurité:

Il faudra que le système dispose d'éléments de sécurité électronique, de sorte que si une anomalie de l'alimentation se produit, ni le système ni les éléments qui le suivent ne seront affectés.

### La capacité d'échelonnement de l'ensemble:

Dans une première phase de la réalisation du système, on ne prévoit pas une expansion du module distributeur pour pouvoir disposer de plusieurs de ceux-ci connectés en chaîne. Cependant, il faut tenir compte de ce qui suit, par rapport au dessin.

Afin de pouvoir disposer de plus de points du réseau que ceux que peut posséder un module standard (4+1), le système permet la possibilité d'accroître le nombre de prises jusqu'à (8+1) ainsi que de pouvoir effectuer la connexion de plusieurs modules en série; de sorte qu'à travers les mêmes accès du premier module, on puisse distribuer des services au reste.

Pour cela, il faudra tenir compte de la capacité d'interconnexion en cascade de plusieurs systèmes. Les connexions doivent alors être faites au moyen du connecteur inférieur ou latéral du système de "pins" que le propre système peut comporter dans une deuxième version.

### Procédé de fonctionnement:

Le fonctionnement du système est conditionné par la combinaison des accès dont on disposera:
a) Ligne téléphonique: composée par une ligne téléphonique, pouvant même être de deux opérateurs différents, en étendant ainsi une des normes de l'ICT.
b) Ligne d'ADSL: ligne d'ADSL (avec Splitter) d'entrée que le système sépare en deux services, de voix et d'internet.

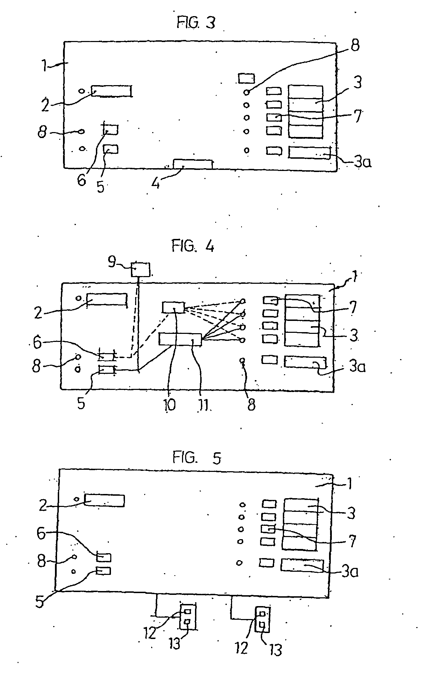

Le schéma de la Fig. 4 montre graphiquement le fonctionnement possible selon le type de solution d'accès choisie par l'utilisateur (afin de faire une différence entre les deux possibilités, deux solutions ont été montrées dans le même graphique), les différentes configurations restant définies de façon logique par le type de ligne du dessin (continue et de tirets).

Étant donné ces possibilités, on dispose d'une logique reliée entre les boutons et les LED indicatrices qui vont marquer la configuration correspondante. (Dans le reste de la description on emploiera les abréviations LED pour parler des "Diodes électroluminescentes").

De même que l'on a étudié pour les accès au système, il faut développer une solution à travers des sélecteurs pour chacune des sorties, selon le service rattaché dont on souhaite disposer. Pour cela, on aura des boutons poussoirs de sélection de chacune des sorties qui neutraliseront le réseau informatique, ainsi que des indicateurs de luminescence (LED) de signalisation du service rattaché pour chacune des sorties tel que montre la figure 4.

Tel que montre le schéma de cette figure 4, la couleur des diverses LED reliées aux entrées et sorties est défini de la façon suivante:
Pour la fonction:
. LED VERTE -> d'activation du service d'accès et d'alimentation (seulement connecté);
. LED ROUGE/LED ÉTEINTE -> de désactivation de service (connectés et communiqués).
. LED VERTE (CLIGNOTANTE) -> de connectivité du réseau (connectés et communiqués).
Pour la programmation:
. LED BLEUE -> indicatrice du service dont on est en train d'indiquer le fonctionnement ou qui est en train d'être configuré.

En ce qui concerne le fonctionnement des boutons et en tenant compte du fait que l'on dispose de trois types de boutons en fonction du service rattaché: le bouton d'ADSL, le bouton téléphonique et 4 boutons de RÉSEAU, le système possède les options de fonctionnement suivantes:
.Bouton d'ADSL
- TAPER BRIÈVEMENT: Cela permet de changer la prise de sortie du service de données d'ADSL en tapant successivement et brièvement en alternant séquentiellement l'activation de cette sortie.
- TAPER DE FAÇON PROLONGÉE: Activation/désactivation du service d'ADSL. Une fois la fonctionnalité est activée, elle sera signalée dans la lampe témoin du bouton. Dans la phase de désactivation, on gardera dans la mémoire la sortie rattachée à ce moment pour que de nouvelles activations ultérieures du service redémarrent à cette position.
. Bouton téléphonique:
- TAPER BRIÈVEMENT: Il entre dans le mode de programmation ->. Clignotement de la première LED, il est changé en tapant successivement et brièvement. La sortie du mode de programmation se fait alors à travers une temporisation depuis la dernière fois que l'on a tapé.

### Les configurations de service:

Conformément aux trois types d'accès définis, les solutions que le système offre sont définies en raison des configurations suivantes, qui sont la base de l'ensemble:

### a) Installation de 1 Ligne téléphonique

Options des connecteurs:
. Le connecteur RJ45, pour le Réseau des ordinateurs (LAN)
. Le connecteur RJ12 pour la connexion téléphonique.

Les connexions effectuées sont affichées de la façon suivante:
- LED d'alimentation allumée en VERT
- Les LED d'ADSL éteintes
- Les LED de téléphonie:
   - VERTE pour des prises activées
   - ROUGE pour des prises désactivées
- La LED du réseau:
   - VERTE pour des prises de réseau activées.
   - VERTE CLIGNOTANTE pour des prises de réseau activées et avec communication
   - ROUGE pour des prises de réseau désactivées.
Les options des boutons doivent être:
. Bouton d'ADSL: étant donné que le service se trouve inactivé, ce bouton n'a aucun service.
. Bouton téléphonique:
   . TAPER BRIÈVEMENT: Il entre dans le mode de programmation ->
      Activation/désactivation de la première LED, il est changé en tapant successivement et brièvement.
. Indicateur de RÉSEAU: Lorsqu'il se trouve actif, il permet d'inutiliser la prise de réseau rattachée en tapant sur le bouton rattaché.

### Installation d'ADSL:

Les options des connecteurs peuvent être:
. Connecteur RJ45: Réseau d'ordinateurs (LAN)
. Connecteur RJ12: Sélection de la connexion téléphonique (ADSL) ou de données (ADSL)
Les options des boutons peuvent être:
. Bouton ADSL: En tapant brièvement on changera de façon séquentielle la prise de sortie du service de données d'ADSL, afin de pouvoir activer cette sortie.
. Bouton téléphonique:
   - TAPER BRIÈVEMENT: Il entre dans le mode de programmation ->.
      L'activation/désactivation de la première LED est changée en tapant successivement et brièvement.

Indicateur de RÉSEAU: Lorsqu'il est actif, il permet d'inutiliser la prise du réseau rattachée en tapant sur le bouton rattaché.
Les connexions effectuées peuvent être:
. LED d'alimentation allumée en VERT.
. LED d'entrée d'ADSL
   - VERTE pour le service activé
   - VERTE pour la prise avec sortie de données ADSL activée
   - ROUGE pour prises sans sortie de données d'ADSL
. LED de téléphonie:
   . VERT pour prises activées
   . ROUGE pour prises désactivées
. LED de réseau:
   . VERTE pour prises de réseau actives
   . VERTE CLIGNOTANTE pour prises de réseau actives et avec communication
   . ROUGE pour prises de réseau désactivées

Afin de compléter la description des perfectionnements auxquels se rapporte ce brevet d'invention, applicables aux systèmes de modules distributeurs configurables de services de communications, des dessins sont annexés dans lesquels, à titre d'exemple non limitatif, des schémas ont été représentés concernant la mise en oeuvre de ce système, des dessins qui ont déjà été évoqués auparavant.
La Fig. 1 est une vue schématique en élévation d'une habitation dans laquelle on a installé un système pourvu des perfectionnements objet de cette invention, montrant l'agencement des divers composants de celui-ci.
La Fig. 2 est un détail, à plus grande échelle, de l'agencement des éléments du système nécessaires dans la connexion avec l'ADSL.
La Fig. 3 illustre un schéma du système avec ses fonctionnalités basiques.
La Fig. 4 représente le possible fonctionnement, selon le type de solution d'accès choisie par l'utilisateur; et

Finalement, la Fig. 5 illustre l'agencement de boutons/poussoirs et d'indicateurs LED de signalisation du service rattachés pour chacune des sorties.

Dans le reste de la description on se rapportera à ces figures au moyen de numération assignée aux divers composants du système.

### NOMENCLATURE

Aussi bien dans les paraphes précédents que dans le reste de la description, diverses abréviations sont utilisées, dont l'usage est généralisé en électronique et informatique qui sont définies à la suite:
- LAN: réseau de zone local
- LED: diode électroluminescente
- Ligne ADSL - Ligne téléphonique à large bande
- Connecteur RJ 45 - Connecteur informatique
- Connecteur RJ12 - Connecteur téléphonique
- Splitter - Filtre ADSL
- Switch - Élément générateur de réseau
- HUB - Concentreur-Transmetteur à connexions multiples.

### Référence de la description des diverses figures.

La description ayant été complétée et conformément aux dessins, il est noté que l'équipement constituant l'élément distributeur de services est formé par un corps ou module (1) pourvu des connecteurs à divers opérateurs externes ainsi que l'entrée de courant à basse tension (2).

Dans ce corps se trouvent les divers composants du système distributeur configurable:

### Volume du corps

Le volume occupé par l'élément est conditionné par le propre dessin du système et plus particulièrement par le nombre de sorties (3) totales (cinq dans l'exemple représenté) correspondant aux sorties du HUB, la sortie auxiliaire (3a) y comprise.

Ainsi donc, la taille du corps où se trouve le système est déterminée par les dimensions approximatives suivantes: Frontale 14x16 cm et grosseur entre 5 et 8 cm.

Dans la partie supérieure de chacun des boutons se trouve l'espace suffisant pour y placer l'étiquetage correspondant à la sortie rattachée.

### Le système d'entrées et de sorties:

Le système d'entrées et de sorties est défini selon la configuration suivante, en tenant compte de l'ensemble des connecteurs rattachés à chacune de ces entrées et sorties.

4 sorties (3) pour le clippage du câble pour la prise RJ45 (et, par conséquent la prise RJ12)
. 1 sortie (3a) auxiliaire sur laquelle on peut connecter un routeur ADSL.
. 1 entrée supérieure ou latérale de connexion d'éléments multiples (9)
. 1 sortie inférieure ou latérale de connexion d'éléments multiples.

### Les boutons ou poussoirs

Le système de boutons/poussoirs permet la génération et la configuration de changements en fonction des besoins de l'utilisateur. Au moyen des boutons, situés tel qu'indique le graphique de définition du système (Fig. 3), on sélectionnera le service rattaché à chacune des prises de l'habitation ainsi que le service d'accès configuré à l'entrée de l'élément.
Les boutons peuvent être les suivants:
. Bouton d'ADSL avec LED incorporée (5)
. Bouton téléphonique (6)
. 4 boutons de RÉSEAU (7).

Le schéma de la Fig. 4 montre, de plus, l'entrée (9) pour une ligne téléphonique unique, pourvue ou non d'ADSL, qui a une incidence directe sur le bouton (5), dans le cas de posséder l'ADSL ou sur le bouton (6) dans le cas où il s'agirait d'une seule ligne téléphonique.

Le schéma indique la situation du distributeur (10) de ligne téléphonique aux diverses prises (3) et du "splitter" (11) de la ligne avec l'ADSL, aux prises (3) indiquées, avec les LED (8) correspondantes et les boutons du réseau (7).

Le schéma de la Fig. 5 montre, en plus de ce qui est indiqué dans les figures précédentes, les sorties des prises RJ45 (12) et RJ12 (13), la première pour le réseau et la deuxième pour le téléphone et l'ADSL.

Dans l'agencement du système dans une habitation (14), le corps (1) reste situé à la place appropriée et accessible et dans les diverses pièces, les prises (15) sont agencées sur le mur de façon appropriée.

Les connexions entre le corps (1) et les prises (15) sont faites avec le conducteur (16) de 8 fils, 2 pour la ligne téléphonique, avec ou sans l'ADSL, et 4 pour la transmission de données.

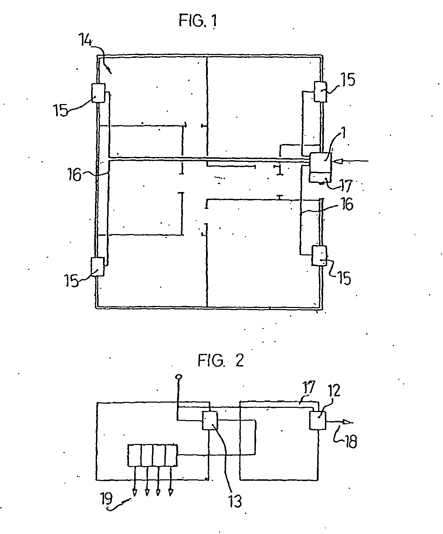

À la sortie des prises (13) du corps (1), lorsqu'on "aménage" l'ADSL, comme illustre le schéma de la Fig. 2, on placera un routeur (17) pour la sortie de données (18) à travers le RJ45 (12), tandis que l'audio (19) sortira à travers le RJ12 (13), tel que représente la Fig. 5.

### Le système d'indicateurs avec des diodes électroluminescentes (LED)

Le système des indicateurs est défini par des LED lumineuses (8) groupées en deux typologies: VERTES d'entrées et de sorties.
. VERT d'alimentation: Aménagement d'une LED qui signalise le fonctionnement correct de l'alimentation du système. Dans le cas de coupure de courant ou de mauvais fonctionnement de l'approvisionnement, elle restera à l'état de "non éclairée".
. VERT de sorties téléphoniques: Aménagement de quatre LED de signalisation de l'activation du service téléphonique rattachée à chaque sortie. Il peut s'agir d'une LED bicolore (avec du ROUGE) pour indiquer la désactivation.
. VERTS de sorties d'ADSL: Combinaison de 4 LED définissant quelle est la prise disposant du service d'ADSL rattaché. Il peut également s'agir d'une LED bicolore (avec du ROUGE) pour indiquer la désactivation.
   Il faut remarquer, en comparaison avec les réalisations précédentes, la simplification apportée aux perfectionnements objet de cette invention au système, plus précisément concernant les indicateurs LED.

### Sécurité du système

Le système est pourvu d'éléments de sécurité pour éviter les surtensions indésirables ainsi que de prise de terre pour les dérives pouvant se produire dans le système.

### Aspect et dessin

Étant donné que le système doit être facilement accessible à l'utilisateur final, il faut que son image ainsi que celle de son corps soient analysée en détails afin d'obtenir un aspect agréable à la vue ainsi qu'un intérieur non accessible, simple pour l'utilisateur.

Le système de fixation doit tenir compte de la possibilité de fixation à quatre points, de préférence par le biais de languettes, groupées deux par deux et situées sur les parties latérales droite et gauche du corps.

Les différentes figures illustrent la distribution du point de vue du dessin, pour ce le corps doit être composé d'éléments visuels, tels que les indicateurs qui seront énumérés plus bas et qui, dans ce cas, doivent être accessibles pour la manipulation finale de l'utilisateur.
. Marque et produit
. LED (8) visibles en deux couleurs, VERT et ROUGE
. Boutons (5), (6) et (7) en couleur
. Système de clippage
. Système de connections entre plusieurs modules en série.
. Tampographie explicative contenant les éléments suivants:
   - Prise d'entrée téléphonique (9)
   - Prise de sortie du réseau et téléphone (3)
   - Prise auxiliaire (3a)
   - Indicateur de sortie du téléphone (7)
   - Indicateur de sortie du RÉSEAU (7)
   - Indicateurs d'entrée d'ADSL (5)
   - Indicateur d'alimentation (2).
. Espace pour placer les étiquettes correspondantes de sortie.

Le reste des éléments resterons au-dehors du corps (1) et donc ils seront définis en fonction des besoins du dessin.

L'objet de cette invention étant suffisamment décrit, il faut ajouter que toute variation des dimensions, formes, finition et caractéristiques des divers éléments constituant le module distributeur configurable des services de communications, auquel les perfectionnements objet de cette invention ont été appliqués, ne changera en rien son esprit résumé dans les revendications annexées.

## Revendications

1. Système de module de distribution configurable de service de télécommunications pour des habitations et assimilés faisant la fonction de standard de services à l'intérieur des habitations ou espaces assimilés et permettant la distribution de ces services de manière échelonnée et flexible aux diverses prises de télécommunications qui s'y trouvent et permettant l'accès aux différents services téléphoniques, de données et d'ADSL en configurant la capacité multi-accès du système associé à ces accès,
**caractérisé en ce qu**'il comprend
un accès unique (9) à travers une seule ligne téléphonique;
un premier bouton (6) pour sélectionner l'accès aux services téléphoniques;
un deuxième bouton (5) pour sélectionner l'accès de données à large bande ADSL;
les deux boutons étant pourvus de diodes luminescentes correspondantes à ces accès;
un distributeur (10) de la ligne téléphonique vers les sorties permanentes du réseau (3, 3a);
un élément de filtrage (11) de la ligne téléphonique lorsque le service ADSL est disponible.

2. Système conformément à la revendication 1, **caractérisé en ce qu'**ils comportent un ensemble de boutons (7) associés aux sorties permanentes au réseau (3) et (3a), pourvus des diodes luminescents (LED) correspondants (8) ayant différentes couleurs, ces sorties (3) et (3a) correspondant au HUB, concentrateur-transmetteur à connexions multiples.

3. Système conformément à la revendication 1, **caractérisé en ce qu**'ils comportent les connecteurs RJ45 (12) et RJ12 (13) reliés aux différentes LED (8) et respectivement configurés pour être commandés au moyen des boutons (5), de sélection ADSL ou (6) ligne téléphonique simple, permettant le raccordement d'un routeur (17) à la sortie de la connexion RJ45 (12) pour la sortie de données (18), le connecteur RJ12 (13) étant disposé pour la sortie audio (19).

## Claims

1. A configurable distribution module system for telecommunication service in rooms and similar, fulfilling the service standard function within the rooms or similar spaces and which allows the staggered and flexible distribution of said services to the various telecommunications outlet sockets located in said spaces, and which allows access to the different telephone, data and ADSL services, configuring the multi-access capability of the system associated with said accesses,
**characterized in that** it comprises:
a single access (9) via a single telephone line;
one button (6) for the selection of access to telephone services;
a second button (5) for the selection of access to ADSL broadband data;
the two buttons being equipped with light-emitting diodes corresponding to said access;
a telephone line distributor (10) towards the permanent network outlets (3, 3a);
a filtration element (11) for the telephone line when the ADSL service is available.

2. A system as claimed in claim 1, **characterised in that** it features a set of buttons (7) associated with the permanent network outlets (3) and (3a), equipped with the corresponding light-emitting diodes (LEDs) (8) of different colours, said outlets (3) and (3a) corresponding to the HUB, multiple-connection concentrator-transmitter.

3. A system as claimed in claim 1, **characterised in that** it features the RJ45 (12) and RJ12 (13) connectors linked to the different LEDs (8) and configured respectively to be controlled by means of the ADSL (5) or simple telephone line (6) selector buttons, which allow the connection of a router (17) at the RJ45 connection outlet (12) for the data outlet (18), the RJ12 connector (13) being provided for the audio outlet (19).

## Patentansprüche

1. Konfigurierbares Modulsystem zur Verteilung von Telekommunikationsdiensten für Räume oder Ähnliches, das die Funktion von Standarddiensten im Innern der Räume oder ähnlichen Räumlichkeiten unterstützt und das die Verteilung dieser Dienste auf die verschiedenen Telekommunikationsanschlüsse, die sich in diesen Räumlichkeiten befinden, in einer stufenweise und flexiblen Art und Weise ermöglicht, und das den Zugang zu den verschiedenen Telefondiensten, Datendiensten und ADSL-Diensten ermöglicht, wobei die Vielfachzugriffskapazität (Multiple Access) des mit diesen Zugängen verbundenen Systems konfiguriert wird,
**dadurch gekennzeichnet, dass** es Folgendes umfasst:
ei einziger Zugang (9) über eine einzige Telefonleitung;
ein erster Knopf (6) zur Auswahl des Zugangs zu den Telefondiensten;
ein zweiter Knopf (5) zur Auswahl des Zugangs zu den ADSL-Breitbanddaten;
wobei die beiden Knöpfe mit Leuchtdioden ausgestattet sind, die dem jeweiligen Zugang entsprechen;
ein Verteiler(10) der Telefonleitung zu den permanenten Ausgängen des Netzes (3, 3a);
ein Filterelement(11) der Telefonleitung, wenn der ADSL-Dienst verfügbar ist.

2. System nach Anspruch 1, **dadurch gekennzeichnet, dass** es eine Gesamtheit von Knöpfen (7) umfasst, die mit den permanenten Ausgängen des Netzes (3) und (3a) verbunden sind und die mit entsprechenden Leuchtdioden (LED) (8) ausgestattet sind, die verschiedene Farben haben, wobei diese Ausgänge (3) und (3a) dem HUB, Konzentrator-Transmitter von Vielfachzugriffen (Multiple Access) entsprechen.

3. System nach Anspruch 1, **dadurch gekennzeichnet, dass** es die Konnektoren RJ45 (12) und RJ12 (13) umfasst, die mit den verschiedenen LED (8) verbunden sind, und jeweils dazu konfiguriert sind, um über die Knöpfe (5) zur Auswahl des ADSL oder (6) der einzigen Telefonleitung gesteuert zu werden, die die Verbindung eines Routers (17) zu dem Ausgang der RJ45-Verbindung (12) für den Ausgang der Daten (18) ermöglichen, wobei der Konnektor RJ12 (13) für den Audioausgang (19) ausgerichtet ist.
